(19) **Europäisches Patentamt**
**European Patent Office**
**Office européen des brevets**

(11) **EP 2 682 897 B1**

(12) **EUROPEAN PATENT SPECIFICATION**

(45) Date of publication and mention
of the grant of the patent:
**21.11.2018 Bulletin 2018/47**

(51) Int Cl.:
***G06K 9/00*** *(2006.01)*

(21) Application number: **13174651.3**

(22) Date of filing: **02.07.2013**

(54) **Lane departure warning system**

Spurwechsel-Warnsystem

Système d'avertissement de suivi de voie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.07.2012 JP 2012149871**

(43) Date of publication of application:
**08.01.2014 Bulletin 2014/02**

(73) Proprietor: **Clarion Co., Ltd.
Saitama 330-0081 (JP)**

(72) Inventors:
• **Imai, Masato**
**Tokyo 100-8220 (JP)**
• **Takemura, Masayuki**
**Tokyo 100-8220 (JP)**
• **Muramatsu, Shoji**
**Tokyo 100-8220 (JP)**

(74) Representative: **MERH-IP Matias Erny Reichl
Hoffmann
Patentanwälte PartG mbB
Paul-Heyse-Strasse 29
80336 München (DE)**

(56) References cited:
**WO-A2-2008/089966     US-A1- 2003 103 650**

• **JUNG C R ET AL: "A lane departure warning
system using lateral offset with uncalibrated
camera", INTELLIGENT TRANSPORTATION
SYSTEMS, 2005. PROCEEDINGS. 2005 IEEE
VIENNA, AUSTRIA 13-16 SEPT. 2005,
PISCATAWAY, NJ, USA,IEEE, 13 September 2005
(2005-09-13), pages 348-353, XP010843048, DOI:
10.1109/ITSC.2005.1520073 ISBN:
978-0-7803-9215-1**

• **Richard O Duda, Peter E. Hart, David G. Stork:
"Pattern Classification", 31 December 2001
(2001-12-31), John Wiley & Sons, New York,
XP055301032, ISBN: 978-0-471-05669-0 pages
48-50,**

## Description

The present invention relates to a lane departure warning device that gives a warning to a driver of a vehicle on which the device is mounted and which the driver is driving (hereafter, referred to as "own vehicle") when the own vehicle is likely to depart from a lane.

Various technologies have been proposed, which are designed to capture images around a vehicle by an in-vehicle camera and recognize objects (vehicles, pedestrians and so on) and traffic signs/marks (road surface paints such as compartment lines, marks such as "STOP" and so on) in the captured image. For example, Japanese Patent Publication Laid-open No. 2003-44863 discloses a division line recognition device. If the division line recognition device can detect a compartment line such as a white line or Botts' dots painted on a road by using an in-vehicle camera and obtain a position of a vehicle in a lane on which the vehicle is travelling, that is, a relative position with respect to the compartment line, it can be estimated whether the possibility that the vehicle will depart from the lane is high or low can be estimated. If, when the possibility of departure is high, a warning is given to the driver or the steering and/or brakes are controlled, the departure of the vehicle from the lane will be prevented or, if it is unavoidable, the amount of departure from the lane can be decreased.

The division line recognition device disclosed in Japanese Patent Publication Laid-open No. 2003-44863 is configured to vary a threshold value for use in the recognition and judgment of division lines (white lines) depending on the size of dirtiness on the camera. As a result, even when the dirtiness on the camera has an increased size, the device can remain in a state in which it can well recognize white lines. However, since the threshold value is varied to those values at which white lines can be readily recognized, there is also an increasing possibility that the device will erroneously recognize objects other than the white lines. If such a division line recognition device is applied to a lane departure warning system, there is an increasing possibility that an erroneous warning is given more often.

WO 2008/089966 A2 describes a method and a system for video-based road departure warning for a vehicle on a road. The road departure warning involves receiving an image of a road in front of the vehicle from a video imager, and detecting one or more road markings in the image corresponding to markings on the road. Then, analyzing the characteristics of an image region beyond the detected markings to determine a rating for drivability of the road corresponding to said image region, and detecting the lateral offset of the vehicle relative to the markings on the road based on the detected road markings. A warning signal is generated as function of said lateral offset and said rating.

The discussed technical shortcomings of the prior art are overcome by the invention according to claim 1. The dependent claims relate to further preferred developments.

According to an aspect of the present invention, lane departure warning device includes: a compartment line detection unit that detects a compartment line in an image of a running lane on which a vehicle is traveling, the image being captured by an image capturing device which the vehicle has; a dirtiness detection unit that detects dirtiness on any one of a lens of the image capturing device or a partition between an outside of a vehicle interior of the vehicle and the image capturing device; a departure judgment unit that judges whether or not the vehicle departs from the compartment line; and a warning judgment unit that when it is judged that the vehicle departs from the compartment line, outputs a warning signal based on a degree of the dirtiness detected. A position of the vehicle with respect to the compartment line when the warning signal is output varies depending on the degree of the dirtiness.

## BRIEF DESCRIPTION OF THE DRAWINGS

FIG. 1 presents a schematic configuration diagram showing a lane departure warning device according to a first embodiment;

FIG. 2 presents a flowchart for explaining a basic processing procedure in the lane departure warning device;

FIG. 3 presents a diagram for explaining detection of dirtiness;

FIG. 4 presents a diagram for explaining detection of a compartment line;

FIGS. 5A and 5B present each a diagram for explaining a distance to a compartment line;

FIG. 6 presents a diagram for explaining an example of a method for correcting a result of measurement by an image capturing device that captures an image of a rear side of the vehicle to a value measured from a position of the front wheels;

FIGS. 7A and 7B present each a diagram illustrating an example of a relationship between a degree of dirtiness and a threshold value for the judgment of departure;

FIGS. 8A and 8B present each a diagram illustrating an example of a relationship between a degree of dirtiness and a filter coefficient by which a distance to a compartment line is multiplied;

FIGS. 9A and 9B present each a diagram illustrating an example of a relationship between a degree of dirtiness and a correction coefficient by which yaw angle is multiplied;

FIG. 10 presents a schematic configuration diagram showing a lane departure warning device according to a second embodiment;

FIGS. 11A and 11B present each a diagram for explaining a detection range in which a compartment line is detected;

FIG. 12 presents a schematic configuration diagram showing a lane departure warning device according to a third embodiment;

FIGS. 13A and 13B present each an example of a graph representing a relationship between a compartment line fluctuation amount and a threshold value for departure judgment;

FIGS. 14A and 14B present each a diagram showing an example of a graph representing a relationship between a compartment line fluctuation amount and a filter coefficient; and

FIGS. 15A and 15B present each a diagram showing an example of a graph representing a relationship between a compartment line fluctuation amount and a correction coefficient.

DESCRIPTION OF PREFERRED EMBODIMENTS

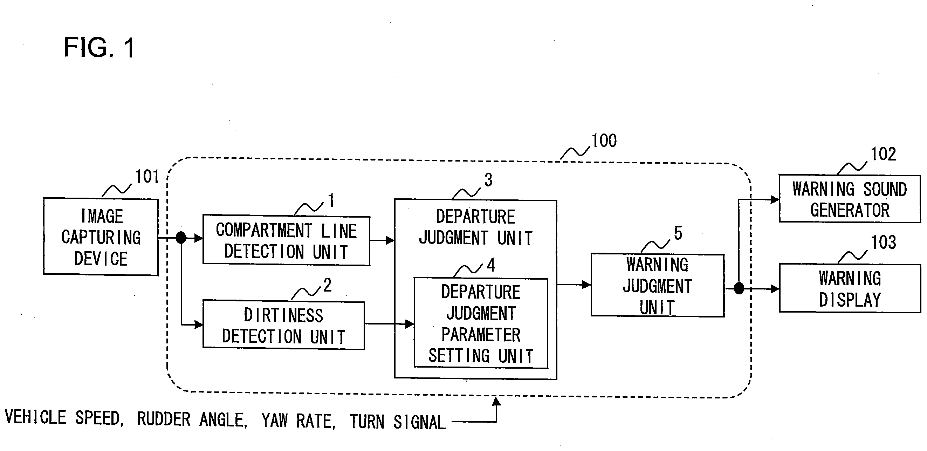

(First Embodiment) FIG. 1 presents a schematic configuration diagram showing a lane departure warning device 100 according to a first embodiment of the present invention.

The lane departure warning device 100 according to the present embodiment, as shown in FIG. 1, includes a compartment line detection unit 1, a dirtiness detection unit 2, a departure judgment unit 3 having a departure judgment parameter setting unit 4, and a warning judgment unit 5 and repeatedly executes a computer program on a predetermined cycle.

Image data of images captured by the image capturing device 101 is input to the lane departure warning device 100 and further, various types of information about the vehicle such as vehicle speed, rudder angle, yaw rate, and turn signal are input to the lane departure warning device 100. When the warning judgment unit 5 judges that there is a high possibility that the own vehicle will depart from a lane on which it is running, the warning judgment unit 5 outputs a warning generation command to a warning sound generator 102 and a warning display 103.

The image capturing device 101 outputs, through a dedicated line, images obtained by capturing images of an outside of the own vehicle by an image sensor such as a CCD (Charge Coupled Device) image sensor or a CMOS (Complementary Metal Oxide Semiconductor) image sensor to the compartment line detection unit 1 and the dirtiness detection unit 2 of the lane departure warning device 100 as analog data or as image data that can be treated by a computer after conversion of the analog data thereinto by digital processing.

The compartment line detection unit 1 detects compartment lines such as white line and Botts' dots painted on roads in the form of solid line, broken line or sequence of dots by using image data (image information) relating to the outside of the vehicle captured by the image capturing device 101. The Botts' dots include a center line, border lines of lanes, for example, a pair of lanes such as a left side lane and a right side lane, and outer lines of a roadway.

The dirtiness detection unit 2 detects lens dirtiness by using the image data (image information) of images of the outside of the vehicle captured by the image capturing device 101. Examples of the lens dirtiness include dirtiness on a surface of a lens of the image capturing device 101 when the image capturing device 101 is arranged outside the vehicle interior or dirtiness on a surface of a partition (glass or the like) between the outside of the vehicle interior and the image capturing device 101 when the image capturing device 101 is arranged in the vehicle interior. Here, "dirtiness" means "a state in which a material on the surface of the ground such as soil or mud is adhering", "a state in which an artificial material such as a snow-melting agent is adhering", "a state in which rain drops or water drops are adhering", "a state in which the surface of a lens is cloudy or turbid whitely", and so on. The dirtiness detection unit 2 obtains a degree of the detected dirtiness and outputs the obtained degree of dirtiness to the departure judgment parameter setting unit 4.

The departure judgment unit 3 judges whether or not the possibility that the vehicle will depart from the compartment line is high. Here, it is preferred that the departure judgment is made according to Japanese Industrial Standard JIS D 0804 or ISO (International Organization for Standardization) standard ISO/DIS 17361.

The departure judgment unit 3 performs judgment as to whether or not the possibility that the vehicle will depart from the compartment line is high based on the degree of lens dirtiness detected by the dirtiness detection unit 2. The setting of the parameter on this occasion is performed by the departure judgment parameter setting unit 4.

When the departure judgment unit 3 judges that there is a high possibility that the vehicle will depart from the compartment line and when no warning suppression condition is met, the warning judgment unit 5 outputs a warning generation command to the warning sound generator 102 or the warning display 103 through a communication system such as an in-vehicle LAN or a dedicated line. Here, the warning suppression conditions include the following ones. That is, the turn signal indicator is being operated by the driver; it is within a predetermined time from completion of operation of the turn signal indicator (for example, for 2 seconds); the vehicle speed is equals to or shorter than a predetermined value (for example, 70 km/h or lower); the curvature radius of road is equals to or smaller than a predetermined value (for example, 200 m or less); and so on.

The warning sound generator 102 includes a speaker or the like that transmits a warning by sound to the driver based on the output from the warning judgment unit 5.

The warning display 103 includes a display, a meter panel, a warning light or the like that visually transmits a warning to the driver based on the output from the warning judgment unit 5.

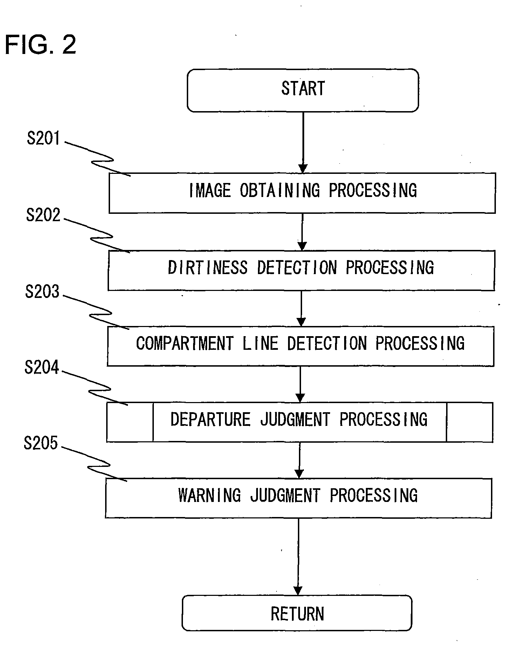

FIG. 2 presents a flowchart illustrating an example of a processing procedure, which is performed when a CPU (not shown) in the lane departure warning device 100 according to the present embodiment executes a program therefor.

First, in step S201, the lane departure warning device 100 digitally processes an image captured by the image capturing device 101 and takes in the result of the digital processing as image data. However, when the image has already been digital processed by the image capturing device 101, the lane departure warning device 100 takes in the image data that is output from the image capturing device 101 directly.

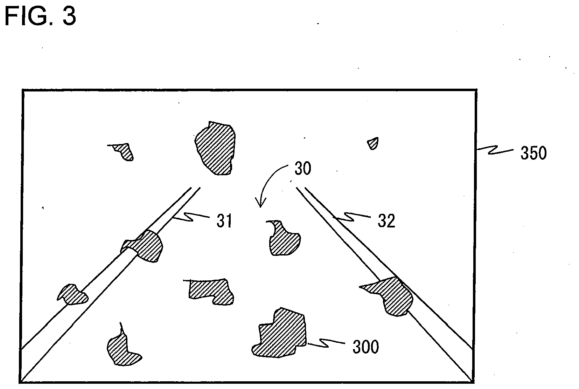

Then, in step S202, the dirtiness detection unit 2 in the lane departure warning device 100 detects lens dirtiness using the image data taken in by the lane departure warning device 100 in step S201. A specific example of a method of the processing for the detection of the lens dirtiness is explained with reference to FIG. 3.

FIG. 3 presents an image 350 corresponding to the image data taken in by the lane departure warning device 100 in step S201, the image 350 showing two compartment lines 31 and 32 on a lane 30. Further, a hatched region 300 in the image 350 corresponding to the image data represents mud dirtiness (dirtiness with mud) on the surface of the lens of the image capturing device 101, with other hatched regions similarly representing mud dirtiness. As a method for detecting the mud dirtiness region 300, there may be used a method in which a mud dirtiness region 300, which is not scrolling together with the background, using a phenomenon that during driving the background is scrolling or a method in which a mud dirtiness region 300 is fixed using information such as a difference in luminance from the surroundings.

Then, the dirtiness detection unit 2 obtains a degree of the detected mud dirtiness. The degree of mud dirtiness is generally obtained by a ratio of area of the mud dirtiness region 300 to a total area of the image 350 corresponding to the image data. For example, it is assumed that a range of an index representing the degree of mud dirtiness is 0 to 100, with a smaller index representing less mud dirtiness. According to a method, when a ratio of an area of the mud dirtiness region 300 to a total area of the image 350 corresponding to the image data is 0%, the index representing the degree of mud dirtiness is defined to be 0; when the ratio of the area of the mud dirtiness region 300 to the total area of the image 350 corresponding to the image data is 50%, the index representing the degree of mud dirtiness is defined to be 100; and when the ratio of the area of the mud dirtiness region 300 to the total area of the image 350 corresponding to the image data is between 0% and 50%, the index representing the degree of mud dirtiness is obtained by linear interpolation. The degree of mud dirtiness may be represented by stepwise levels. For example, when the ratio of the area of the mud dirtiness region 300 to the total area of the image 350 corresponding to the image data is 0% to 10%, the degree of mud dirtiness is defined to be at level 0; when the ratio of the area of the mud dirtiness region 300 to the total area of the image 350 corresponding to the image data is 10% to 25%, the degree of mud dirtiness is defined to be at level 1; when the ratio of the area of the mud dirtiness region 300 to the total area of the image 350 corresponding to the image data is 25% to 40%, the degree of mud dirtiness is defined to be at level 2; and when the ratio of the area of the mud dirtiness region 300 to the total area of the image 350 corresponding to the image data is 40% or more, the degree of mud dirtiness is defined to be at level 3.

Here, the method of detecting mud dirtiness has been explained above. Regarding the rain drops or water drops, the ratio of the area of the rain drops or water drops region to the total area of the image 350 corresponding to the image data can be obtained similarly to the mud dirtiness. With regard to dirtiness with the snow-melting agent or white turbidity, the degree of dirtiness can be obtained by a method of detecting the state of light scattering or edge strength of an object in the image data.

In this step, the degree of dirtiness finally output from the dirtiness detection unit 2 is expressed by the largest value among the degrees of dirtiness corresponding to the mud dirtiness regions 300 when the degrees of dirtiness are represented by indices 0 to 100, or by the highest level (for example, level 1 is higher than level 0) among those levels corresponding to the mud dirtiness regions 300 when the degrees of dirtiness are expressed by stepwise levels. The degree dirtiness need not always be expressed by indices 0 to 100 or by four levels from level 0 to level 3, but may be expressed otherwise with the same definition in a consistent way.

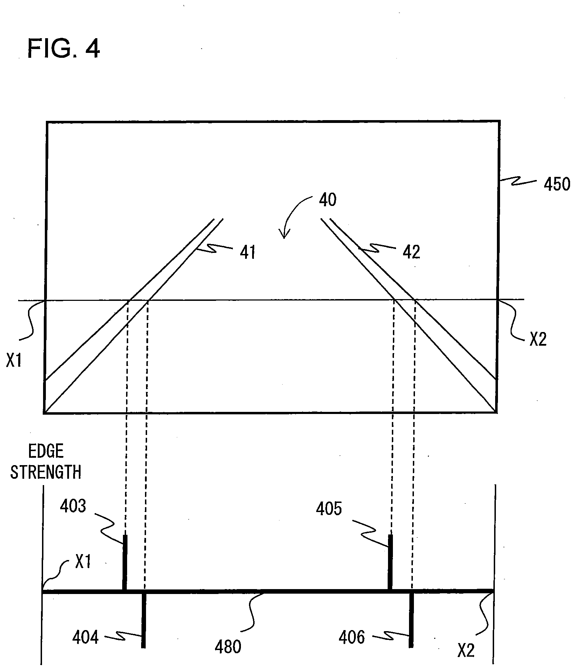

Then, in step S203, the compartment line detection unit 1 in the lane departure warning device 100 detects a compartment line painted on a road in the image corresponding to the image data taken in by the lane departure warning device 100 in step S201. A specific method of the processing for detecting the compartment line is explained with reference to FIG. 4.

As shown in FIG. 4, there are two compartment lines 41 and 42 in a lane 40 in the image 450 corresponding to the image data taken in by the lane departure warning device 100 in step S201. The compartment lines 41 and 42 can be detected by a method of extracting a compartment line by calculating edge strength within the image 450. Here, "edge" means a point at which a luminance value changes abruptly in the image. FIG. 4 shows an edge strength 480 detected by scanning from end point X1 toward end point X2 of the image 450. The peaks 403 and 405 of the edge strength 480 indicate respective points where the road changes to the compartment line, and the luminance value changes abruptly from dark to bright. The peaks 404 and 406 of the edge strength 480 indicate respective points where the compartment line changes to road and the luminance value changes from bright to dark. By finding a combination of the peaks 403 and 404 and a combination of the 405 and 406 as mentioned above, it is possible to detect the compartment lines 41 and 42.

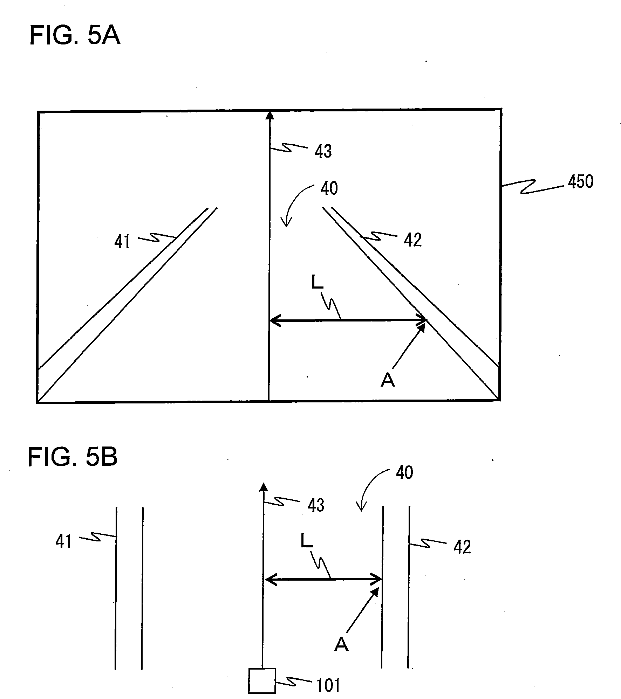

Furthermore, the compartment line detection unit 1 calculates a distance between the compartment line and an optical axis of the image capturing device 101, that is, a distance from the optical axis of the image capturing device 101 to the compartment line. A specific calculation method in a step in which the distance from the optical axis of the image capturing device 101 to the compartment line is calculated is explained with reference to FIGS. 5A and 5B.

FIG. 5A, like FIG. 4, shows the image 450 that corresponds to the image data taken in step S201 by the lane departure warning device 100 and FIG. 5B presents an overhead view in the same situation as that shown in FIG. 5A. In FIGS. 5A and 5B, there are two compartment lines 41 and 42 and an optical axis 43 of the image capturing device 101 is indicated by an arrow. Here, as the length L from the optical axis 43 of the image capturing device 101 to the compartment line 42, for example, a distance from the optical axis 43 to a point A on the internal side of the compartment line 42 (on the side of the optical axis 43) is used. The compartment line detection unit 1 calculates the length L from the optical axis 43 of the image capturing device 101 to the compartment line 42 by obtaining coordinates of the point A on the image 450 shown in FIG. 5A based on peaks of edge strengths and converting the obtained coordinates of the point A into the actual coordinate system in FIG. 5B. Similarly, the compartment line detection unit 1 calculates the distance from the optical axis 43 of the image capturing device 101 to the compartment line 41.

Note that when calculating the distance from the optical axis 43 of the image capturing device 101 to the compartment line 42, the coordinates of a point on the outer side of the compartment line 42 or a central point of the compartment line 42 may be used instead of the coordinates of the point A on the internal side of the compartment line 42. It will suffice if the same definition is used in a consistent way. Further, the number of the points on a compartment line that is used for calculating the distance from the optical axis 43 of the image capturing device 101 to the compartment line is not limited to one for each of the compartment lines within the image 450. Instead, a plurality of points (for example 10 points) for each of the compartment lines within the image 450 may be used.

Then, in step S204, the departure judgment unit 3 in the lane departure warning device 100 judges whether or not the own vehicle will depart from a lane on which it is traveling based on the information about the compartment lines detected by the compartment line detection unit 1 in step S203. Here, explanation is made on a case where the position at which the image capturing device 101 is attached is a rear end of the vehicle, with image capturing being performed in a direction toward the rear side of the vehicle.

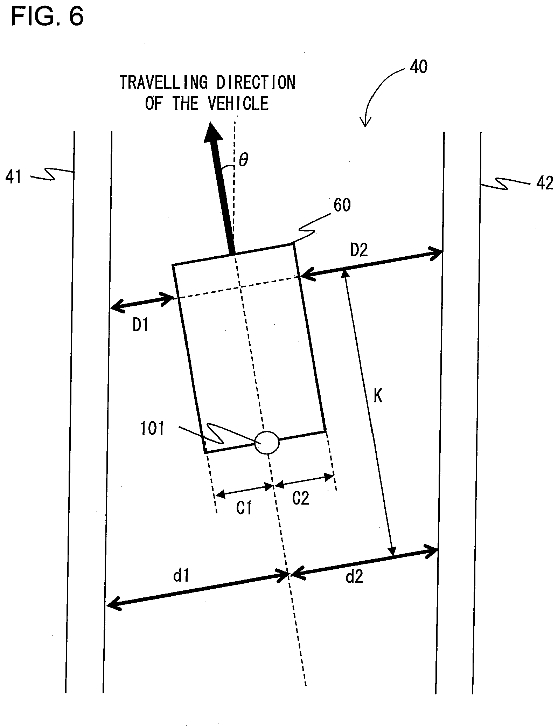

The departure judgment unit 3 first estimates a distance from a predetermined site of the own vehicle to the compartment line based on the compartment line detected in step S203 and the distance from the optical axis of the image capturing device 101 to the compartment line. Here, according to Japanese Industrial Standards JIS D 0804 and ISO Standards ISO/DIS 17361, whether or not a warning is given is judged based on the distance from an outer part of the front wheel of the vehicle to the compartment line and hence it is necessary to correct a distance from the optical axis to the compartment line detected from the image of the rear side of the vehicle captured by the image capturing device 101 to the distance from the outer part of the front wheel to the compartment line. The correction processing is specifically explained with reference to FIG. 6.

FIG. 6 presents a diagram showing estimation on a case where a vehicle 60 is running on a lane 40 divided by the two compartment lines 41 and 42. The direction of travel of the vehicle 60 is identical with the direction of the optical axis.

The departure judgment unit 3 corrects a distance d1 from the optical axis of the image capturing device 101 to a left compartment line 41 calculated by the image capturing device 101 arranged on the rear of the vehicle to a distance D1 from an outer part of a left front wheel of the vehicle to the left compartment line 41 (distance to the compartment line after correction). The distance D1 from the outer part of the left front wheel of the vehicle to the left compartment line 41 can be calculated according to an equation (1), using a distance K from a point at which the distance d1, i.e., the distance from the optical axis of the image capturing device 101 to the left compartment line 41 is calculated to the front wheel of the vehicle, a distance C1 from the image capturing device 101 to the outer part of the left front wheel of the vehicle, and a yaw angle $\theta$ of the vehicle.

$$D1 = d1 - K \times \tan\theta - C1 \qquad \qquad \ldots (1)$$

In the same manner, the departure judgment unit 3 corrects a distance d2 from the optical axis of the image capturing device 101 to a right compartment line 42 calculated by the image capturing device 101 arranged on the rear of the vehicle to a distance D2 from an outer part of a right front wheel of the vehicle to the right compartment line 42 (distance to the compartment line after correction). The distance D2 from the outer part of the right front wheel of the vehicle to the right compartment line 42 can be calculated according to an equation (2), using a distance K from a point at which the distance d2, i.e., the distance from the optical axis of the image capturing device 101 to the right compartment line 42 is calculated to the front wheel of the vehicle, a distance C2 from the image capturing device 101 to the outer part of the right front wheel of the vehicle, and a yaw angle θ of the vehicle.

$$D2 = d2 + K \times \tan θ - C2 \qquad \dots (2)$$

Note that vehicle yaw angles θ can be obtained by a method using a least-square method in which an angle of compartment line is obtained from a plurality of pieces of information about distances d1, d2 to right and left compartment lines in the past, a method in which an angle of compartment line is calculated directly from a sheet of captured image, and so on.

Then, the departure judgment unit 3 judges whether or not the possibility that the vehicle 60 will depart from the compartment line is high using the distances D1 and D2 to the compartment line obtained according to the equations (1) and (2), respectively. Specifically, whether or not the distance D1 (or D2) to the compartment line is less than a predetermined threshold value for departure judgment Ds (D1<Ds) is judged. When an affirmative judgment is made, it is judged that the possibility that the vehicle 60 will depart from the compartment line is high and this is notified to the driver in a subsequent processing. On the contrary, when a negative judgment is made, it is judged that the possibility that the vehicle 60 will depart from the compartment line is low and this is notified to the driver in a subsequent processing.

Further, in step S204, the departure judgment parameter setting unit 4 in the departure judgment unit 3 sets a parameter to be used for the judgment of departure using the degree of dirtiness obtained by the dirtiness detection unit 2 in step S202. This is because according as the degree of dirtiness increases, result of detection of a compartment line in step S203 becomes increasingly unstable, so that if the result of the detection of the compartment line is used as it is, there is a possibility that an erroneous warning will be given, and the departure judgment parameter setting unit 4 sets a parameter to be used for the judgment of departure in order to decrease the frequency of occurrence of the erroneous warning. A specific method to achieve this is explained with reference to the drawings.

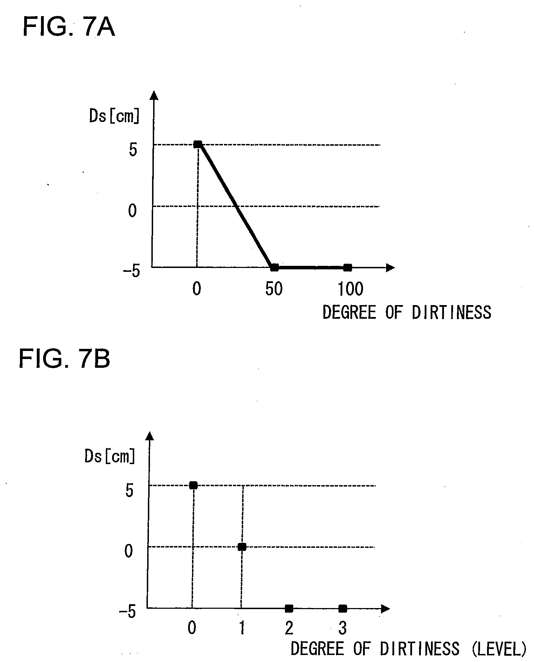

First, explanation is made on the method of setting a threshold value for the judgment of departure Ds. FIGS. 7A and 7B present each an example of a graph that depicts a relationship between the degree of dirtiness and the threshold value for the judgment of departure Ds. FIG. 7A presents a graph for a case where the degree of dirtiness obtained in step S202 is expressed by indices 0 to 100. As the index of the degree of dirtiness increases, the threshold value for the judgment of departure Ds is set low. FIG. 7B presents a graph for a case where the degree of dirtiness obtained in step S202 is expressed by levels 0 to 3. As the level of the degree of dirtiness increases, the threshold value for the judgment of departure Ds is set low. As explained above, by setting the threshold value for the judgment of departure Ds to be smaller as the degree of dirtiness becomes higher, the parameter to be used for the judgment of departure can be set taking into consideration unstableness of the result of detection of a compartment line when the degree of dirtiness is high, so that the frequency of occurrence of the erroneous warning can be decreased.

Then, explanation is made on the method of setting a filter coefficient p of a filter by which distances d1 and d2 (see FIG. 6) to the compartment line detected in step S203 are multiplied (where p is within the range of 0<p≤1). First, the distances d1f and d2f to the compartment line filter after correction can be calculated using distances dlfz and d2fz obtained as a result of calculation in a previous processing cycle according to the equations (3) and (4), respectively, below.

$$d1f = d1fz \times (p - 1) + d1 \times p \qquad \dots (3)$$

$$d2f = d2fz \times (p - 1) + d2 \times p \qquad \dots (4)$$

According to the equations (3) and (4), the smaller the filter coefficient is, the more priority is given to the result of calculation in the previous processing cycle, so that unstableness of the result of detection of the compartment line can be alleviated. Then, by modifying the equations (1) and (2) so as to use the result of calculation according to the equations (3) and (4), respectively, equations (5) and (6), respectively, below are obtained.

$$D1 = d1f - K \times \tan θ - C1 \qquad \dots (5)$$

$$D2 = d2f + K \times \tan \theta - C2 \qquad \ldots (5)$$

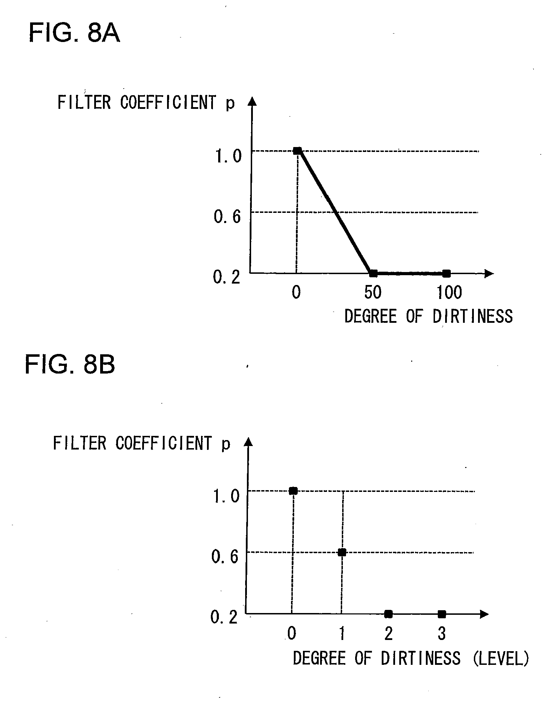

FIGS. 8A and 8B present each a graph representing a relationship between degree of dirtiness and filter coefficient p. FIG. 8A presents a graph for a case where the degree of dirtiness obtained in step S202 is expressed by indices 0 to 100. As the index of the degree of dirtiness increases, the filter coefficient p is set to be smaller. FIG. 8B presents a graph for a case where the degree of dirtiness obtained in step S202 is expressed by levels 0 to 3. As the level of the degree of dirtiness obtained in step S202 becomes higher, the value of the filter coefficient p is set to be smaller. As explained above, by setting the filter coefficient p to be larger as the degree of dirtiness becomes higher, the parameter to be used for the judgment of departure can be set taking into consideration unstableness of the result of detection of a compartment line when the degree of dirtiness is high, so that the frequency of occurrence of the erroneous warning can be decreased.

Here, explanation is made on the method in which the distances d1 and d2 to the compartment line detected in step S203 (see FIG. 6) are calculated with a filter. However, needless to say, similar effects can be obtained if D1 and D2 calculated according to the equations (1) and (2), respectively, are calculated with a filter. Needless to say, if filter calculation equations other than the equations (3) and (4) are used, similar effects can be obtained.

Then, explanation is made on the method of setting a correction coefficient q (where q is within the range of $0 \leq q \leq 1$) by which yaw angles $\theta$ in the equations (1) and (2) and in the equations (5) an d (6) are multiplied. First, the equations (5) and (6) are modified using the correction coefficient q by which the yaw angle $\theta$ is multiplied to obtain equations (7) and (8) below.

$$D1 = d1f - K \times \tan (\theta \times q) - C1 \qquad \ldots (7)$$

$$D2 = d2f + K \times \tan (\theta \times q) - C2 \qquad \ldots (8)$$

According to the equations (7) and (8), as the correction coefficient q becomes smaller, the correction with the yaw angle $\theta$ becomes less effective, so that unstableness of the yaw angle $\theta$ can be alleviated.

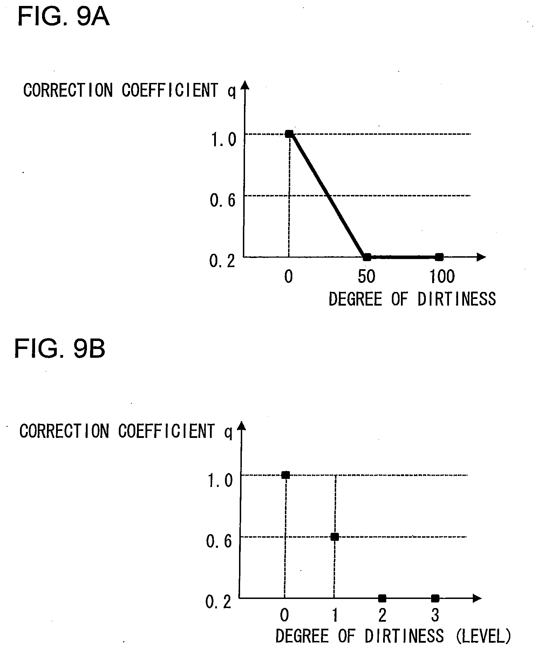

FIGS. 9A and 9B present each an example of a graph representing a relationship between degree of dirtiness and correction coefficient q. FIG. 9A presents a graph for a case where the degree of dirtiness obtained in step S202 is expressed by indices 0 to 100. As the index of the degree of dirtiness becomes larger, the value of the correction coefficient q is set to be smaller. FIG. 9B presents a graph illustrating a case in which the degree of dirtiness is expressed by using levels 0 to 3. As the level of the degree of dirtiness becomes higher, the value of the correction coefficient q is set to be become stepwise smaller. As explained above, by setting the correction coefficient q to become smaller as the degree of dirtiness becomes higher, the parameter to be used for the judgment of departure can be set taking into consideration unstableness of yaw angle $\theta$ when the degree of dirtiness is high, so that the frequency of occurrence of the erroneous warning can be decreased.

As explained above, in step S204, when calculating the distances D1 and D2 to the compartment line, the parameter to be used for the judgment of departure based on the degree of dirtiness obtained in step S202 can be set by using the equations (7) and (8), so that the frequency of occurrence of erroneous warning can be decreased.

Finally, in step S205, when it is judged in step S204 that the possibility that the own vehicle will depart from the compartment line is high and the warning suppression condition is not met, the warning judgment unit 5 outputs a warning generation command to the warning sound generator 102 and the warning display 103 and terminates this routine. Here, examples of the warning suppression condition include the turn signal indicator being in operation; it being within a predetermined time (for example, 2 seconds) from completion of operation of the turn signal indicator; the vehicle speed being not higher than a predetermined value (for example, 70 km/h or less); the curvature radius of road being not higher than a predetermined value (for example, 200 m or less); and so on. The timing at which a warning is cancelled is set to be after a lapse of a predetermined time (for example, 2 seconds) from the warning is given.

As explained above, by changing the parameter to be used for the judgment of departure based on the degree of lens dirtiness, the frequency of occurrence of the erroneous warning can be decreased even when dirt adheres to the lens of the camera or a partition such as a glass plate. In addition, by decreasing the frequency of occurrence of the erroneous warning, the driver and passengers can have improved feeling of safety and reliability.

According to the present embodiment, the position at which the image capturing device is attached to the rear end of the vehicle and the direction of image capturing is toward the rear side of the vehicle. However, an image capturing device that captures images of the front of the vehicle may be used. For example, the position at which the image capturing device is attached may be different from that according to the present embodiment.

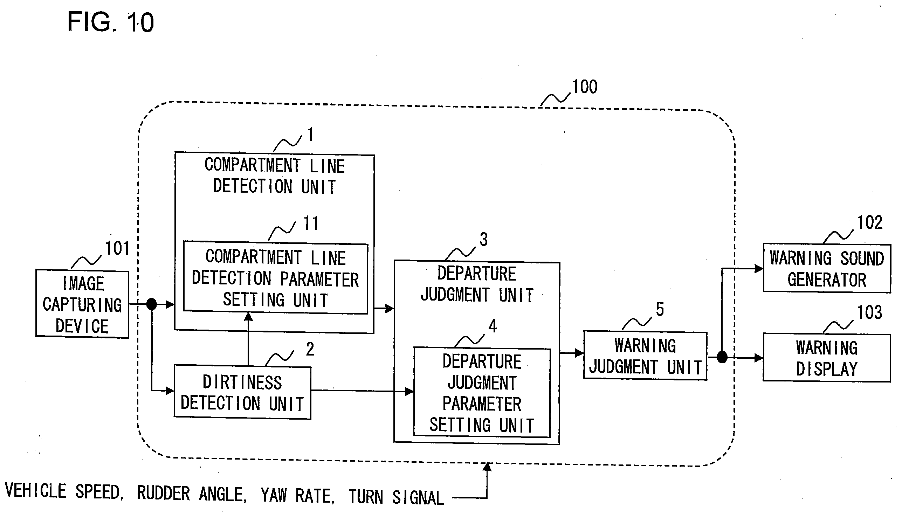

(Second Embodiment) FIG. 10 presents a schematic configuration diagram showing a lane departure warning device 100 according to a second embodiment of the present invention.

In the configuration of the lane departure warning device 100 according to the present embodiment shown in FIG. 10 has a construction corresponding to the construction of the lane departure warning device 100 according to the first embodiment shown in FIG. 1 that additionally includes a compartment line detection parameter setting unit 11 in the compartment line detection unit 1. Hereafter, in the construction shown in FIG. 10, explanation is omitted on parts that have the same reference numerals as the parts shown in Fig. 1 and parts having the same function as the parts shown in FIG. 1 which has already been explained above.

The dirtiness detection unit 2 obtains the degree of the detected dirtiness and outputs it to the compartment line detection parameter setting unit 11 and the departure judgment parameter setting unit 4.

The compartment line detection parameter setting unit 11 sets a parameter to be used when the compartment line detection unit 1 detects a compartment line based on the degree of lens dirtiness detected by the dirtiness detection unit 2.

Then, explanation is made on an example of a processing procedure performed by a CPU (not shown) included in the lane departure warning device 100 according to the present embodiment by executing a program therefor.

The flowchart corresponding to the present embodiment is the same as the flowchart shown in FIG. 2 that corresponds to the first embodiment with a function being added to the content of the processing explained in the first embodiment. In the following, only the function that is added according to the present embodiment is explained.

In step S203 shown in FIG. 2, the method of detecting a compartment line using the degree of dirtiness obtained in step S202 is changed and a decision processing for deciding the reliability of the detected compartment line is added.

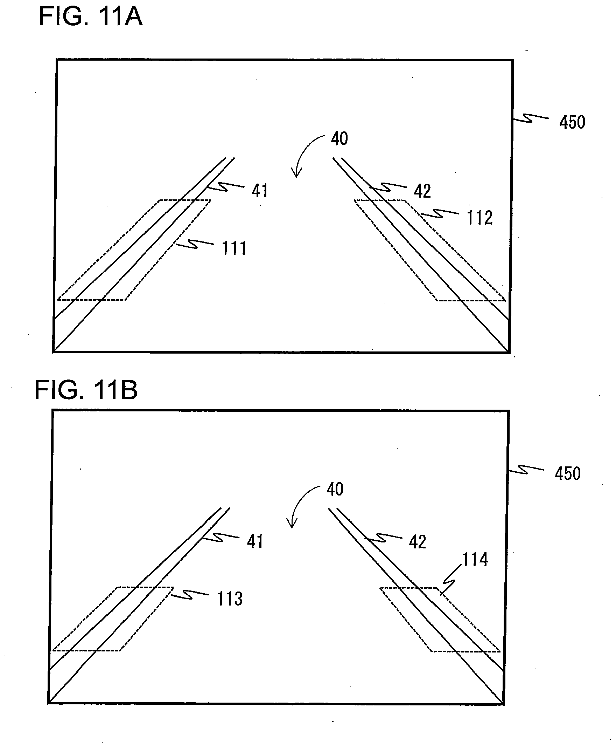

First, explanation is made on a specific method of detecting a compartment line by the compartment line detection unit 1 with reference to FIGS. 11A and 11B. FIGS. 11A and 11B, like FIG. 4A, show each the image 450 corresponding to the image data taken in by the lane departure warning device 100 in step S201. In the image 450, there are two compartment lines 41 and 42 in the lane 40. Usually, in the image incorporated in step S201, a remoter photographic subject image has a lower resolution. Accordingly, the detection of the compartment line is processed by limiting the ranges 111 and 112 in which compartment lines are detected within predetermined ranges as shown in FIG. 11A. As the degree of dirtiness obtained in step S202 increases, it becomes difficult to perform detection of compartment lines in a portion that contains a remote photographic subject image within the region limited to the predetermined range. For this reason, the compartment line detection parameter setting unit 11 further limits the range within which compartment lines are detected based on the degree of dirtiness to ranges 113 and 114 as shown in FIG. 11B. By so doing, the more the degree of dirtiness increases, the compartment line detection unit 1 performs, to a lesser extent, the compartment line detection processing using the portion that contains the remote photographic subject image. Note that the present processing may be modified such that the content of processing is switched between daytime and nighttime when the luminance at the time of image capturing around the vehicle may differ. For example, it may be configured such that the range within which compartment lines are to be detected is limited only in nighttime.

Then, explanation is made on a method of determining the reliability of the compartment line detected by the compartment line detection unit 1. Here, the reliability of the compartment line is expressed by a value of 0 to 100, with a larger value representing a higher reliability. Within the ranges 111 and 112 in which compartment lines are to be detected as shown in FIG. 11A, the compartment line detection parameter setting unit 11 increases the reliability of the compartment line when the compartment line can be detected chronologically continuously until a predetermined threshold value is reached and when the reliability exceeds the predetermined threshold value, the driver is notified that reliability is present in a subsequent processing. Here, as the degree of dirtiness obtained in step S202 increases, the threshold value with which the compartment line detection parameter setting unit 11 judges that the compartment line has acceptable reliability is increased.

As explained above, by changing the method of detecting a compartment line using the degree of dirtiness obtained in step S202 and by adding decision processing for deciding the reliability of the detected compartment line, the precision of detection of a compartment line can be increased.

Further, when the departure judgment unit 3 calculates the equations (1) and (2), the reliability of compartment line obtained in step S203 may be used. Specifically, the departure judgment unit 3 calculates the equations (1) and (2) when it is judged that the compartment line has acceptable reliability. On the other hand, when it is judged that the reliability of the compartment line is not acceptable, the departure judgment unit 3 does not perform calculation of the equations (1) and (2) and sets an invalid value to the distance to the compartment line D1 (or D2).

As explained above, by obtaining the distance to the compartment line based on the reliability of the compartment line, it becomes possible to give a lane departure warning with higher precision than otherwise.

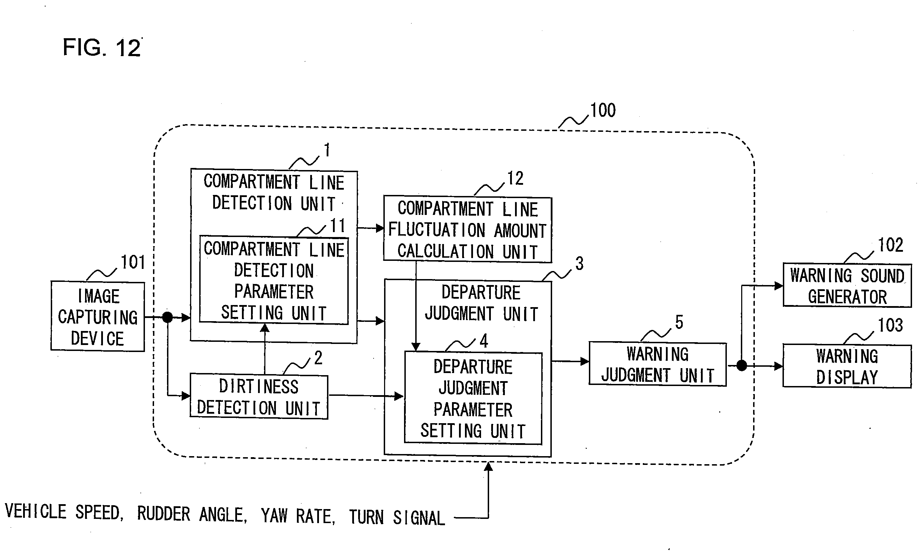

(Third Embodiment) FIG. 12 presents a schematic configuration diagram showing a lane departure warning device 100 according to a third embodiment of the present invention.

The lane departure warning device 100 according to the present embodiment shown in FIG. 12 has a construction that includes the construction of the departure warning device 100 according to the second embodiment (FIG. 10) and a compartment line fluctuation amount calculation unit 12 added thereto. In the following, for the construction shown in FIG. 12, explanation is omitted on those parts having the same reference numerals and those parts having the same functions as the parts shown in FIG. 10 that have been already explained.

The compartment line fluctuation amount calculation unit 12 calculates a chronological fluctuation amount with respect to a distance to a compartment line, that is, a compartment line fluctuation amount based on the distance to the compartment line detected by the compartment line detection unit 1. The departure judgment parameter setting unit 4 sets a parameter to be used for the judgment of departure based on the magnitude of the fluctuation amount.

The compartment line fluctuation amount calculated by the compartment line fluctuation amount calculation unit 12 being large means that the position of the compartment line detected by the compartment line detection unit 1 varies widely. In other words, the detection result by the compartment line detection unit 1 varies widely, which indicates that the detection of the compartment line by the compartment line detection unit 1 is unstable (incorrect) accordingly. That is, when the compartment line fluctuation amount is large, the detection of the compartment line is unstable, so that it becomes highly possible that use of the information about the compartment line as it is will result in giving an erroneous warning at high frequencies.

The compartment line fluctuation amount calculation unit 12 calculates, as a compartment line fluctuation amount, a standard deviation of a difference between a distance to a compartment line in the present processing cycle and a distance to the compartment line in a last processing cycle in a predetermined period of time. The compartment line fluctuation amount may be a value of standard deviation as it is or may be expressed by stepwise levels as follows. For example, when the compartment line fluctuation amount is 0 to 5 cm, it is defined to be at level 0; when the compartment line fluctuation amount is 5 to 15 cm, it is defined to be at level 1; and when the compartment line fluctuation amount is 15 cm or more, it is defined to be at level 2. Here, standard deviation is used. Also, variance may be used. Furthermore, the compartment line fluctuation amount may be calculated by other methods. Based on the compartment line fluctuation amount calculated by the compartment line fluctuation amount calculation unit 12 as mentioned above, the departure judgment parameter setting unit 4 sets parameters for use in the judgment of departure, that is, a threshold value for the judgment of departure Ds, a filter coefficient p of a filter by which the distance to a compartment line is multiplied, and a correction coefficient q by which yaw angle is multiplied.

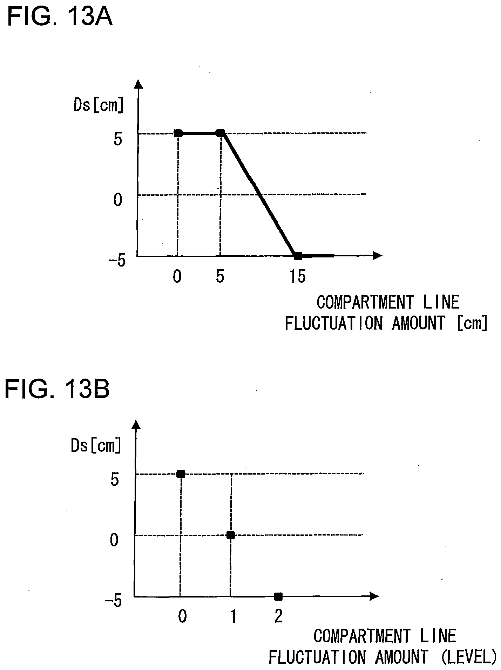

First, explanation is made on the method of setting a threshold value for departure judgment Ds by a departure judgment parameter setting unit 4. FIGS. 13A and 13B present each an example of a graph representing a relationship between the compartment line fluctuation amount and the threshold value for departure judgment Ds. FIG. 13 A indicates that for a larger compartment line fluctuation amount, the value of the threshold value for departure judgment Ds is set to be smaller. FIG. 13B presents a graph illustrating a case in which the compartment line fluctuation amount is stepwise expressed by levels 0 to 2, indicating that for a higher level of compartment line fluctuation amount, the threshold value for departure judgment Ds is stepwise set to be smaller. As explained above, by setting the threshold value for the judgment of departure Ds to be smaller as the compartment line fluctuation amount becomes larger, the parameter to be used for the judgment of departure can be set taking into consideration unstableness of the result of detection of a compartment line when the compartment line fluctuation amount is large, so that the frequency of occurrence of erroneous warning can be decreased.

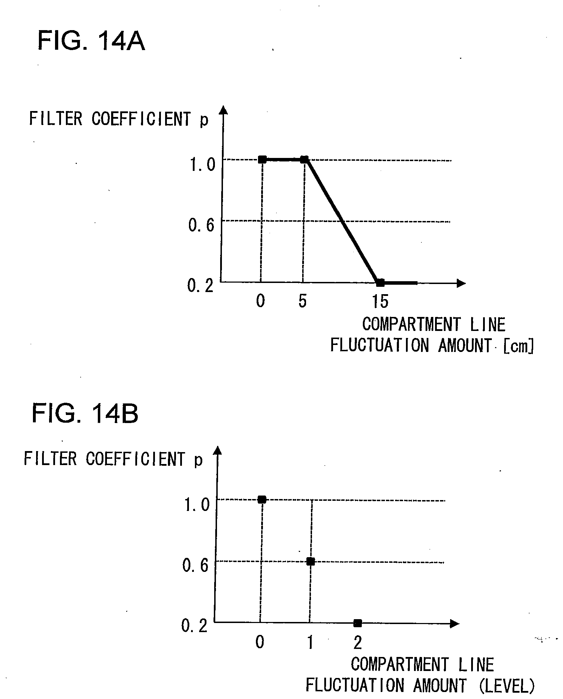

Then, explanation is made on a method of setting a filter coefficient p of a filter by which the distance to a compartment line is multiplied, the method being performed by the departure judgment parameter setting unit 4. FIGS. 14A and 14B present each an example of a graph representing a relationship between the compartment line fluctuation amount and the filter coefficient p. FIG. 14A indicates that for a larger compartment line fluctuation amount, the filter coefficient p is set to be smaller. FIG. 14B presents a graph illustrating a case in which the compartment line fluctuation amount is stepwise expressed by levels 0 to 2, indicating that for a higher level of compartment line fluctuation amount, the filter coefficient p of the filter is stepwise set to be smaller. As explained above, by setting a smaller filter coefficient p as the compartment line fluctuation amount becomes larger, the parameter to be used for the judgment of departure can be set taking into consideration unstableness of the result of detection of a compartment line when the compartment line fluctuation amount is large, so that the frequency of occurrence of erroneous warning can be decreased.

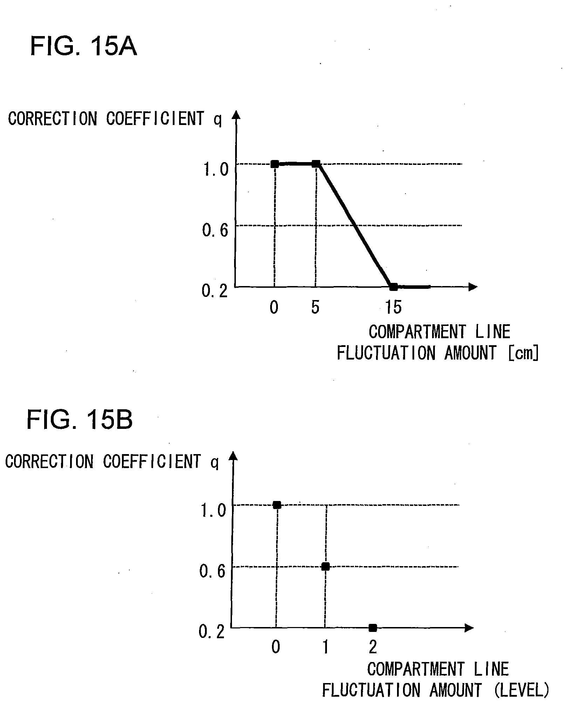

Then, explanation is made on the method of setting a correction coefficient q by which yaw angle is multiplied, by the departure judgment parameter setting unit 4. FIGS. 15A and 15B present each an example of a graph representing a relationship between a compartment line fluctuation amount and a correction coefficient q. FIG. 15A indicates that for a larger compartment line fluctuation amount, the value of correction coefficient q is set to be smaller. FIG. 15B presents a graph illustrating a case where the compartment line fluctuation amount is expressed by levels 0 to 2, indicating that for a larger compartment line fluctuation amount, the value of correction coefficient q is stepwise set to be smaller. As explained above, by setting the correction coefficient q to be smaller as the compartment line fluctuation amount becomes larger, the parameter to be used for the judgment of departure can be set taking into consideration unstableness of yaw angle $\theta$ when the compartment line fluctuation amount is large, so that the frequency of occurrence of an erroneous warning can be decreased.

Note that the parameter for the judgment of departure that is set based on the compartment line fluctuation amount may be calculated separately from the parameter for the judgment of departure that is set based on the degree of dirtiness obtained in step S202 in FIG. 2 as described in the explanation of the first embodiment. In this case, the departure judgment parameter setting unit 4 decides and sets, in step S204, a final parameter for the judgment of departure by selecting either one of the above two types of parameters for the judgment of departure or by averaging the above two types of parameters for the judgment of departure. Note that it is preferred that the two types of parameters for the judgment of departure are compared with each other and a smaller one is selected as a final parameter for the judgment of departure. By so doing, the frequency of occurrence of an erroneous warning can be more decreased.

In any of the first, second and third embodiments, the lane departure warning device 100 may include a cleaning device for removing lens dirtiness. While the lens dirtiness is being cleaned by the cleaning device, it becomes difficult to detect compartment lines since the image that the lane departure warning device 100 obtains from the image capturing device 101 may contain a cleaning agent and/or a wiper. Therefore, it is preferred that the lane departure warning device 100 is configured so as not to give any warning generation command to the outside therefrom while the lens dirtiness is being cleaned by the cleaning device. This can be achieved, for example, by deeming that while the lens dirtiness is being cleaned by the cleaning device, the warning suppression condition of the warning judgment unit 5 is met or by compulsorily decreasing the range in which compartment lines are detected by the compartment line detection parameter setting unit 11 to zero to establish a state where no compartment line is detected. Further, the lane departure warning device 100 may include a notification device that notifies to the driver or passengers that the lane departure warning device 100 is in a state where it does not output any warning generation command to the outside in case that the lane departure warning device 100 outputs no warning generation command to the outside because of the lens dirtiness being cleaned by a cleaning device. In this manner, the driver and passengers can have improved feeling of safety and reliability.

## Claims

1.   A lane departure warning system comprising:

an image capturing device (101);
a compartment line detection unit (1) that is configured to detect a compartment line (31, 32) in an image of a running lane (30) on which a vehicle is traveling, the image (350) being captured by the image capturing device (101);
a dirtiness detection unit (2) that is configured to detect a degree of dirtiness on the lens of the image capturing device (101) when the image capturing device is arranged outside the vehicle interior or on the partition between an outside of a vehicle interior of the vehicle and the image capturing device (101) when the image capturing device (101) is arranged in the vehicle interior, wherein the degree of dirtiness corresponds to a ratio of the area of the dirtiness region to the total area of the image;
a departure judgment unit (3) that is configured to judge whether or not the vehicle departs from the compartment line (31, 32) when the distance from the vehicle to the compartment line (31, 32) becomes smaller than a predetermined threshold value; and
a warning judgment unit (5) that when it is judged by the departure judgment unit (3) that the vehicle departs from the compartment line (31, 32), is configured to output a warning signal, wherein
the compartment line detection unit (1) is configured to calculate the distance from the vehicle to the compartment line as a weighted sum of the current and previous distance with p being the weight for the current distance, 1-p being the weight for the previous distance, and p being within the range $0 \leq p \leq 1$, the weight becoming smaller as the degree of the dirtiness increases; and
the departure judgment unit (3) is configured to decrease the threshold value with increasing degree of the dirtiness.

2.   A lane departure warning system comprising:

an image capturing device (101);
a compartment line detection unit (1) that is configured to detect a compartment line (31, 32) in an image of a running lane (30) on which a vehicle is traveling, the image (350) being captured by the image capturing device (101);
a dirtiness detection unit (2) that is configured to detect a degree of dirtiness on the lens of the image capturing device (101) when the image capturing device is arranged outside the vehicle interior or on the partition between an outside of a vehicle interior of the vehicle and the image capturing device (101) when the image capturing device (101) is arranged in the vehicle interior, wherein the degree of dirtiness corresponds to a ratio of the area of the dirtiness region to the total area of the image;

a departure judgment unit (3) that is configured to judge whether or not the vehicle departs from the compartment line (31, 32) when the distance from the vehicle to the compartment line (31, 32) becomes smaller than a predetermined threshold value; and

a warning judgment unit (5) that when it is judged by the departure judgment unit (3) that the vehicle departs from the compartment line (31, 32), is configured to output a warning signal, wherein

the compartment line detection unit (1) is configured to multiply the angle formed by the longitudinal axis of the vehicle and the compartment line (31, 32) used to calculate the distance from the vehicle to the compartment line by a correction coefficient, the correction coefficient becoming smaller as the degree of the dirtiness increases; and the departure judgment unit (3) is configured to decrease the threshold value with increasing degree of the dirtiness.

3. The lane departure warning system according to claim 1 or 2, wherein a compartment line detection parameter setting unit (11) is configured to vary a detection range of the compartment line (31, 32) in which the compartment line (31, 32) is detected by the compartment line detection unit (1) based on the degree of the dirtiness.

4. The lane departure warning device according to claims 1, 2 or 3, wherein

a compartment line detection parameter setting unit (11) is configured to vary a threshold value for determining reliability of the compartment line (31, 32), based on the degree of the dirtiness.

**Patentansprüche**

1. Spurverlassenswarnsystem, das Folgendes umfasst:

eine Bildaufnahmeeinrichtung (101);

eine Fahrspurmarkierungsdetektionseinheit (1), die konfiguriert ist, eine Fahrspurmarkierung (31, 32) in einem Bild einer durchlaufenden Fahrspur (30), auf der sich ein Fahrzeug bewegt, zu detektieren, wobei das Bild (350) durch die Bildaufnahmeeinrichtung (101) aufgenommen worden ist;

eine Verschmutzungsgraddetektionseinheit (2), die konfiguriert ist, einen Grad der Verschmutzung an der Linse der Bildaufnahmeeinrichtung (101), wenn die Bildaufnahmeeinrichtung außerhalb des Fahrzeuginnenraums angeordnet ist, oder an der Abtrennung zwischen einer Außenseite eines Fahrzeuginnenraums des Fahrzeugs und der Bildaufnahmeeinheit (101), wenn die Bildaufnahmeeinheit (101) im Fahrzeuginnenraum angeordnet ist, zu detektieren, wobei der Grad der Verschmutzung einem Verhältnis der Fläche des Verschmutzungsgradbereichs zur Gesamtfläche des Bildes entspricht;

eine Verlassensbeurteilungseinheit (3), die konfiguriert ist, zu beurteilen, ob das Fahrzeug von der Fahrspurmarkierung (31, 32) abweicht oder nicht, wenn die Entfernung vom Fahrzeug zur Fahrspurmarkierung (31, 32) kleiner als ein vorgegebener Schwellenwert wird; und

eine Warnungsbeurteilungseinheit (5), die konfiguriert ist, dann, wenn durch die Verlassensbeurteilungseinheit (3) beurteilt wird, dass das Fahrzeug von der Fahrspurmarkierung (31, 32) abweicht, ein Warnsignal auszugeben, wobei

die Fahrspurmarkierungsdetektionseinheit (1) konfiguriert ist, die Entfernung vom Fahrzeug zur Fahrspurmarkierung als eine gewichtete Summe der aktuellen und der vorherigen Entfernung zu berechnen, wobei p das Gewicht für die aktuelle Entfernung ist, 1 - p das Gewicht für die vorherige Entfernung ist und p im Bereich $0 \leq p \leq 1$ liegt und das Gewicht kleiner wird, während der Grad der Verschmutzung ansteigt; und

die Verlassensbeurteilungseinheit (3) konfiguriert ist, den Schwellenwert mit zunehmendem Grad der Verschmutzung zu verringern.

2. Spurverlassenswarnsystem, das Folgendes umfasst:

eine Bildaufnahmeeinrichtung (101);

eine Fahrspurmarkierungsdetektionseinheit (1), die konfiguriert ist, eine Fahrspurmarkierung (31, 32) in einem Bild einer durchlaufenden Fahrspur (30), auf der sich ein Fahrzeug bewegt, zu detektieren, wobei das Bild (350) durch die Bildaufnahmeeinrichtung (101) aufgenommen worden ist;

eine Verschmutzungsgraddetektionseinheit (2), die konfiguriert ist, einen Grad der Verschmutzung an der Linse der Bildaufnahmeeinrichtung (101), wenn die Bildaufnahmeeinrichtung außerhalb des Fahrzeuginnenraums angeordnet ist, oder an der Abtrennung zwischen einer Außenseite eines Fahrzeuginnenraums des Fahrzeugs und der Bildaufnahmeeinheit (101), wenn die Bildaufnahmeeinheit (101) im Fahrzeuginnenraum angeordnet ist, zu detektieren, wobei der Grad der Verschmutzung einem Verhältnis der Fläche des Verschmutzungsgradbereichs zur Gesamtfläche des Bildes entspricht;

eine Verlassensbeurteilungseinheit (3), die konfiguriert ist, zu beurteilen, ob das Fahrzeug von der Fahrspurmarkierung (31, 32) abweicht oder nicht, wenn die Entfernung vom Fahrzeug zur Fahrspurmarkierung (31, 32) kleiner als ein vorgegebener Schwellenwert wird; und

eine Warnungsbeurteilungseinheit (5), die konfiguriert ist, dann, wenn durch die Verlassensbeurteilungseinheit (3) beurteilt wird, dass das Fahrzeug von der Fahrspurmarkierung (31, 32) abweicht, ein Warnsignal auszugeben, wobei

die Fahrspurmarkierungsdetektionseinheit (1) konfiguriert ist, den Winkel, der durch die Längsachse des Fahrzeugs und die Fahrspurmarkierung (31, 32), die verwendet wird, die Entfernung vom Fahrzeug zur Fahrspurmarkierung zu berechnen, gebildet wird, mit einem Korrekturkoeffizienten zu multiplizieren, wobei der Korrekturkoeffizient kleiner wird, während der Grad der Verschmutzung ansteigt; und die Verlassensbeurteilungseinheit (3) konfiguriert ist, den Schwellenwert mit zunehmendem Grad der Verschmutzung zu verringern.

3. Spurverlassenswarnsystem nach Anspruch 1 oder 2, wobei eine Fahrspurmarkierungsdetektions-Parametereinstelleinheit (11) konfiguriert ist, einen Detektionswinkel der Fahrspurmarkierung (31, 32), in dem die Fahrspurmarkierung (31, 32) durch die Fahrspurmarkierungsdetektionseinheit (1) auf der Grundlage des Grades der Verschmutzung detektiert wird, zu variieren.

4. Spurverlassenswarnsystem nach Anspruch 1, 2 oder 3, wobei
eine Fahrspurmarkierungsdetektions-Parametereinstelleinheit (11) konfiguriert ist, einen Schwellenwert zum Bestimmen der Verlässlichkeit der Fahrspurmarkierung (31, 32) auf der Grundlage des Grades der Verschmutzung zu variieren.

## Revendications

1. Système d'avertissement de sortie de voie comprenant :

un dispositif de capture d'image (101) ;
une unité de détection de ligne de compartiment (1) qui est configurée pour détecter une ligne de compartiment (31, 32) dans une image d'une voie de roulement (30) sur laquelle un véhicule est en circulation, l'image (350) étant capturée par le dispositif de capture d'image (101) ;
une unité de détection de saleté (2) qui est configurée pour détecter un degré de saleté sur la lentille du dispositif de capture d'image (101) quand le dispositif de capture d'image est agencé à l'extérieur du compartiment du véhicule ou sur la cloison entre l'extérieur et l'intérieur du véhicule et du dispositif de capture d'image (101) quand le dispositif de capture d'image (101) est agencé à l'intérieur du véhicule, dans lequel le degré de saleté correspond à un rapport de la superficie de la région sale sur la superficie totale de l'image ;
une unité de jugement de sortie (3) qui est configurée pour juger quant à savoir si le véhicule sort ou non de la ligne de compartiment (31, 32) quand la distance depuis le véhicule jusqu'à la ligne de compartiment (31, 32) devient plus faible qu'une valeur seuil prédéterminée ; et
une unité de jugement d'avertissement (5) qui, lorsque l'unité de jugement de sortie (3) a jugé que le véhicule sort de la ligne de compartiment (31, 32), est configurée pour délivrer un signal d'avertissement, dans lequel l'unité de détection de ligne de compartiment (1) est configurée pour calculer la distance depuis le véhicule jusqu'à la ligne de compartiment sous forme d'une somme pondérée de la distance actuelle et de la distance précédente, avec p comme pondération pour la distance actuelle, 1-p comme pondération pour la distance précédente, et p étant dans la plage telle que $0 \leq p \leq 1$, la pondération devenant plus petite lorsque le degré de saleté augmente ; et
l'unité de jugement de sortie (3) est configurée pour diminuer la valeur seuil lorsque le degré de saleté augmente.

2. Système d'avertissement de sortie de voie comprenant :

un dispositif de capture d'image (101) ;
une unité de détection de ligne de compartiment (1) qui est configurée pour détecter une ligne de compartiment (31, 32) dans une image d'une voie de roulement (30) sur laquelle un véhicule est en circulation, l'image (350) étant capturée par le dispositif de capture d'image (101) ;
une unité de détection de saleté (2) qui est configurée pour détecter un degré de saleté sur la lentille du dispositif de capture d'image (101) quand le dispositif de capture d'image est agencé à l'extérieur du compartiment du véhicule ou sur la cloison entre l'extérieur et l'intérieur du véhicule et du dispositif de capture d'image (101) quand le dispositif de capture d'image (101) est agencé à l'intérieur du véhicule, dans lequel le degré de saleté correspond à un rapport de la superficie de la région sale sur la superficie totale de l'image ;

une unité de jugement de sortie (3) qui est configurée pour juger quant à savoir si le véhicule sort ou non de la ligne de compartiment (31, 32) quand la distance depuis le véhicule jusqu'à la ligne de compartiment (31, 32) devient plus faible qu'une valeur seuil prédéterminée ; et

une unité de jugement d'avertissement (5) qui, quand l'unité de jugement de sortie (3) a jugé que le véhicule sort de la ligne de compartiment (31, 32), est configurée pour délivrer un signal d'avertissement, dans lequel l'unité de détection de ligne de compartiment (1) est configurée pour multiplier l'angle formé par l'axe longitudinal du véhicule et la ligne de compartiment (31, 32) utilisée pour calculer la distance depuis le véhicule jusqu'à la ligne de compartiment par un coefficient de correction, le coefficient de correction devenant plus faible lorsque le degré de saleté augmente ; et l'unité de jugement de sortie (3) est configurée pour diminuer la valeur seuil lorsque le degré de saleté augmente.

3. Système d'avertissement de sortie de voie selon la revendication 1 ou 2, dans lequel une unité de fixation de paramètre de détection de ligne de compartiment (11) est configurée pour faire varier une plage de détection de la ligne de compartiment (31, 32) dans laquelle la ligne de compartiment (31, 32) est détecté par l'unité de détection de ligne de compartiment (1) sur la base du degré de saleté.

4. Dispositif d'avertissement de sortie de voie selon les revendications 1, 2 ou 3, dans lequel une unité de fixation de paramètre de détection de ligne de compartiment (11) est configurée pour faire varier une valeur seuil afin de déterminer la fiabilité de la ligne de compartiment (31, 32), sur la base du degré de saleté.

FIG. 1

VEHICLE SPEED, RUDDER ANGLE, YAW RATE, TURN SIGNAL

## FIG. 2

```
                            ┌─────────────────────┐
                            │        START        │
                            └─────────────────────┘
                                      │
                                      ▼
S201  ┌──────────────────────────────────────────────────────┐
      │           IMAGE OBTAINING PROCESSING                  │
      └──────────────────────────────────────────────────────┘
                                      │
                                      ▼
S202  ┌──────────────────────────────────────────────────────┐
      │          DIRTINESS DETECTION PROCESSING               │
      └──────────────────────────────────────────────────────┘
                                      │
                                      ▼
S203  ┌──────────────────────────────────────────────────────┐
      │        COMPARTMENT LINE DETECTION PROCESSING          │
      └──────────────────────────────────────────────────────┘
                                      │
                                      ▼
S204  ┌──────────────────────────────────────────────────────┐
      │          DEPARTURE JUDGMENT PROCESSING                │
      └──────────────────────────────────────────────────────┘
                                      │
                                      ▼
S205  ┌──────────────────────────────────────────────────────┐
      │           WARNING JUDGMENT PROCESSING                 │
      └──────────────────────────────────────────────────────┘
                                      │
                                      ▼
                            ┌─────────────────────┐
                            │       RETURN        │
                            └─────────────────────┘
```

FIG. 3

# FIG. 4

EDGE
STRENGTH

## FIG. 5A

## FIG. 5B

## FIG. 6

TRAVELLING DIRECTION
OF THE VEHICLE

FIG. 7A

FIG. 7B

FIG. 8A

FIG. 8B

FIG. 9A

FIG. 9B

# FIG. 10

VEHICLE SPEED, RUDDER ANGLE, YAW RATE, TURN SIGNAL

FIG. 11A

FIG. 11B

FIG. 12

VEHICLE SPEED, RUDDER ANGLE, YAW RATE, TURN SIGNAL

FIG. 13A

Ds [cm]

5

0

−5

0   5   15

COMPARTMENT LINE
FLUCTUATION AMOUNT [cm]

FIG. 13B

Ds [cm]

5

0

−5

0   1   2

COMPARTMENT LINE
FLUCTUATION AMOUNT (LEVEL)

## FIG. 14A

FILTER COEFFICIENT p

1.0

0.6

0.2

0    5    15

COMPARTMENT LINE
FLUCTUATION AMOUNT [cm]

## FIG. 14B

FILTER COEFFICIENT p

1.0

0.6

0.2

0    1    2

COMPARTMENT LINE
FLUCTUATION AMOUNT (LEVEL)

EP 2 682 897 B1

FIG. 15A

CORRECTION COEFFICIENT q

1.0

0.6

0.2

0   5      15

COMPARTMENT LINE
FLUCTUATION AMOUNT [cm]

FIG. 15B

CORRECTION COEFFICIENT q

1.0

0.6

0.2

0   1   2

COMPARTMENT LINE
FLUCTUATION AMOUNT (LEVEL)

28

**REFERENCES CITED IN THE DESCRIPTION**

**Patent documents cited in the description**

- JP 2003044863 A

- WO 2008089966 A2